# EUROPEAN PATENT APPLICATION

(11) **EP 4 679 618 A1**
(43) Date of publication of application: **14.01.2026**
(21) Application number: 24901011.7
(22) Date of filing: 03.12.2024
(51) Int. Cl.: H01M 50/574, H01M 50/507, H01M 50/296

(54) **BATTERY PACK**

(30) Priority: 07.12.2023 KR 20230176229
(71) Applicant: LG Energy Solution, Ltd., Seoul 07335 (KR)
(72) Inventor: SON, Hong Se, Daejeon 34122 (KR)
(74) Representative: Plasseraud IP
(86) International application number: PCT/KR2024/019530
(87) International publication number: WO 2025/121825

(57) **Abstract**

A battery pack including first to third battery cell assemblies arranged in a first direction; fourth to sixth battery cell assemblies arranged in the first direction, the fourth to sixth battery cell assemblies being spaced apart from the first to third battery cell assemblies in a second direction that is perpendicular to the first direction; and first to fifth inter-bus bars, wherein the first inter-bus bar and the second inter-bus bar are spaced apart from each other in the second direction.

## Description

### Cross-Reference to Related Application(s)

This application is a National Stage Application of International Application No. PCT/KR2024/019530 filed on December 3, 2024, which claims the benefit of and priority to Korean Patent Application No. 10-2023-0176229, filed on December 7, 2023, and the entire contents of the Korean patent application is incorporated herein by reference.

### Technical Field

The present invention relates to a battery pack.

### Background Art

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

### Brief Description

The present invention is directed to providing a battery pack with improved safety.

Embodiments provide a battery pack. The battery pack includes first to third battery cell assemblies arranged in a first direction, fourth to sixth battery cell assemblies arranged in the first direction and spaced apart from the first to third battery cell assemblies in a second direction perpendicular to the first direction, a first inter-bus bar electrically connected to each of the first and second battery cell assemblies, a second inter-bus bar electrically connected to each of the second and third battery cell assemblies, a third inter-bus bar electrically connected to each of the third and fourth battery cell assemblies, a fourth inter-bus bar electrically connected to each of the fourth and fifth battery cell assemblies, and a fifth inter-bus bar electrically connected to each of the fifth and sixth battery cell assemblies, and the first inter-bus bar and the second inter-bus bar are spaced apart from each other in the second direction.

The second battery cell assembly may include a second positive terminal connected to the first inter-bus bar and a second negative terminal connected to the second inter-bus bar, and the second positive terminal and the second negative terminal may be spaced apart from each other in a third direction oblique to each of the first and second directions.

The fourth inter-bus bar and the fifth inter-bus bar may be spaced apart from each other in the second direction.

A distance between the first inter-bus bar and the fifth inter-bus bar in the second direction may be the same as a distance between the second inter-bus bar and the fourth inter-bus bar in the second direction.

A distance between the first inter-bus bar and the fourth inter-bus bar in the second direction may be the same as a distance between the second inter-bus bar and the fifth inter-bus bar in the second direction.

The distance between the first inter-bus bar and the fourth inter-bus bar in the second direction may be different from the distance between the second inter-bus bar and the fifth inter-bus bar in the second direction.

The distance between the first inter-bus bar and the fourth inter-bus bar in the second direction may be greater than the distance between the second inter-bus bar and the fifth inter-bus bar in the second direction.

The distance between the first inter-bus bar and the fourth inter-bus bar in the second direction may be less than the distance between the second inter-bus bar and the fifth inter-bus bar in the second direction.

The distance between the first inter-bus bar and the fifth inter-bus bar in the second direction may be different from the distance between the second inter-bus bar and the fourth inter-bus bar in the second direction.

The distance between the first inter-bus bar and the fifth inter-bus bar in the second direction may be greater than the distance between the second inter-bus bar and the fourth inter-bus bar in the second direction.

The distance between the first inter-bus bar and the fourth inter-bus bar in the second direction may be the same as the distance between the second inter-bus bar and the fifth inter-bus bar in the second direction.

The distance between the first inter-bus bar and the fifth inter-bus bar in the second direction may be less than the distance between the second inter-bus bar and the fourth inter-bus bar in the second direction.

The distance between the first inter-bus bar and the fourth inter-bus bar in the second direction may be the same as the distance between the second inter-bus bar and the fifth inter-bus bar in the second direction.

### Advantageous Effects

Positive terminals and negative terminals of a plurality of battery cell assemblies of a battery pack according to embodiments of the present invention may be dispersed. Therefore, when a thermal runaway event occurs in the battery pack, it is possible to prevent an internal short circuit of the plurality of battery cell assemblies and improve the safety of the battery pack.

Effects achievable from embodiments of the present invention are not limited to the above-described effects, and other effects that are not described herein will be clearly derived and understood by those of ordinary skilled in the art to which the embodiments of the present invention pertain from the following description. That is, unintended effects achieved when the embodiments of the present invention are implemented are derivable by those of ordinary skilled in the art from the embodiments of the present invention.

### Brief Description of the Drawings

FIG. 1 is a plan view of a battery pack according to embodiments.
FIG. 2 is a cross-sectional view taken along line 1I-1I' of FIG. 1.
FIG. 3 is a plan view of a battery pack according to embodiments.
FIG. 4 is a plan view of a battery pack according to embodiments.
FIG. 5 is a plan view of a battery pack according to embodiments.
FIG. 6 is a plan view of a battery pack according to embodiments.

### Detailed Description

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

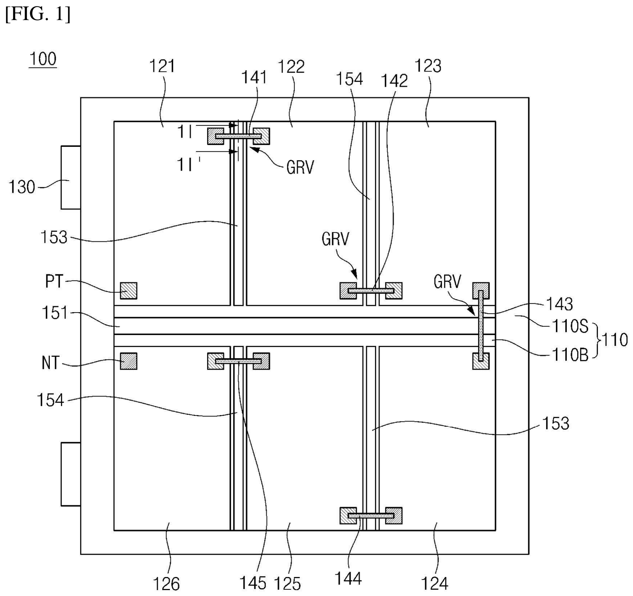

FIG. 1 is a plan view of a battery pack 100 according to embodiments.

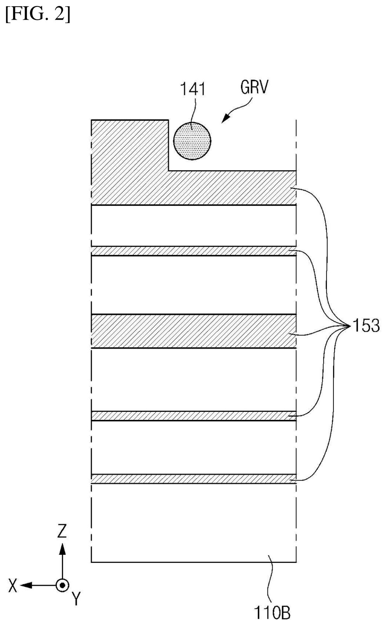

FIG. 2 is a cross-sectional view taken along line 1I-1I' of FIG. 1. Referring to FIG. 1, the battery pack 100 may include a pack housing 110, a plurality of battery cell assemblies 121, 122, 123, 124, 125, and 126, exhaust devices 130, inter-bus bars 141, 142, 143, 144, and 145, a center beam 151, and cross-beams 153 and 154. The battery pack 100 is a final form of a battery system to be mounted in a mobility device or the like.

The pack housing 110 may include a base plate 110B and side walls 110S. Here, two directions substantially parallel to a mounting surface of the base plate 110B are defined as an X-axis direction and a Y-axis direction, and a direction substantially perpendicular to the mounting surface of the base plate 110B is defined as a Z-axis direction. The X-axis direction, the Y-axis direction, and the Z-axis direction may be substantially perpendicular to one another.

The base plate 110B may have a flat plate shape. The side walls 110S may be substantially perpendicular to the base plate 110B. The side walls 110S may be adjacent to edges of the base plate 110B. The side walls 110S may be coupled to the edges of the base plate 110B.

The base plate 110B may include a center beam. The center beam may be surrounded by the side walls 110S. Accordingly, the center beam may partition a space defined by the pack housing 110.

Each of the base plate 110B and the side walls 110S may be provided by an extrusion process. The base plate 110B may include a plurality of plates coupled to each other by friction stir welding. The center beam may be included in one of the plurality of plates of the base plate 110B, formed by the extrusion process, together with one of the plurality of plates of the base plate 110B, or welded to one of the plurality of plates of the base plate 110B.

The plurality of battery cell assemblies 121, 122, 123, 124, 125 and 126 may be on the mounting surface of the base plate 110B of the pack housing 110. The battery cell assemblies 121, 122, and 123 may be arranged in the X-axis direction. The battery cell assembly 122 may be interposed between the battery cell assemblies 121 and 123 in the X-axis direction.

The battery cell assemblies 124, 125, and 126 may be arranged in the X-axis direction. The battery cell assembly 125 may be interposed between the battery cell assemblies 124 and 126 in the X-axis direction. The battery cell assemblies 121, 122, and 123 may be spaced apart from the battery cell assemblies 124, 125, and 126 in the Y-axis direction.

The base plate 110B may support the plurality of battery cell assemblies 121, 122, 123, 124, 125, and 126. The side walls 110S may horizontally surround the plurality of battery cell assemblies 121, 122, 123, 124, 125, and 126.

In embodiments, the battery pack 100 may be of a moduleless type, and each of the plurality of battery cell assemblies 121, 122, 123, 124, 125 and 126 may not include a module frame. In embodiments, the battery pack 100 may be of a module type, and each of the plurality of battery cell assemblies 121, 122, 123, 124, 125 and 126 may include a module frame.

Each of the plurality of battery cell assemblies 121, 122, 123, 124, 125, and 126 may include a cell stack including a plurality of battery cells, a positive terminal PT, and a negative terminal NT.

The cell stack may include the plurality of battery cells. The battery cells are basic units of a lithium ion battery, i.e., a secondary battery. The battery cells may each include an electrode assembly, an electrolyte, and a case.

Each of the battery cells may be one of a cylindrical battery cell, a prismatic battery cell, and a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. A jelly roll type electrode assembly is manufactured by winding a positive electrode, a negative electrode, and a separator interposed therebetween. A stack type electrode assembly may include a plurality of positive electrodes and a plurality of negative electrodes that are stacked sequentially, and a plurality of separators interposed therebetween.

According to embodiments, the battery cells of the cell stack may form a plurality of banks. The plurality of banks may include one or more battery cells connected in parallel. The plurality of banks may be connected in series to each other. The number of battery cells included in each of the plurality of banks and the number of banks of the cell stack may be determined according to a voltage and a current to be output through the battery cell assembly 120.

According to embodiments, the cell stack may further include a plurality of separators. The plurality of separators may horizontally support the plurality of battery cells to prevent swelling of the plurality of battery cells. According to embodiments, the plurality of separators may be thermal barriers. According to embodiments, each of the plurality of separators may have high melting temperature and low thermal conductivity. According to embodiments, each of the plurality of separators may include a flame retardant material such as ceramic and a coated glass material. According to embodiments, the plurality of separators may be configured to discharge a fire retarding material and a fire extinguishing agent when a thermal runaway event occurs.

According to embodiments, the positive terminal PT and the negative terminal NT may be configured to be electrically connected to the cell stack. According to embodiments, the positive terminal PT and the negative terminal NT may be configured to output a voltage of the cell stack. Resulting power (i.e., a voltage and/or current) according to an electrical configuration of the cell stack may be output through the positive terminal PT and the negative terminal NT.

The positive terminal PT and the negative terminal NT of the battery cell assembly 121 may be spaced apart from each other in the X-axis direction and the Y-axis direction. The positive terminal PT of the battery cell assembly 121 may be closer to a central area of the pack housing 110 in the Y-axis direction than the negative terminal NT thereof. The positive electrode terminal PT and the negative electrode terminal NT of the battery cell assembly 121 may be arranged diagonally (i.e., obliquely with respect to each of the X-axis direction and the Y-axis direction).

The positive terminal PT and the negative terminal NT of the battery cell assembly 122 may be spaced apart from each other in the X-axis direction and the Y-axis direction. The positive terminal PT of the battery cell assembly 122 may be farther from the central area of the pack housing 110 in the Y-axis direction than the negative terminal NT thereof. The positive electrode terminal PT and the negative electrode terminal NT of the battery cell assembly 122 may be arranged diagonally (i.e., obliquely with respect to each of the X-axis direction and the Y-axis direction).

The positive terminal PT and the negative terminal NT of the battery cell assembly 123 may be arranged in the X-axis direction. The positive terminal PT and the negative terminal NT of the battery cell assembly 123 may be closer to the central area of the pack housing 110 in the Y-axis direction than to an edge of the pack housing 110 in the Y-axis direction (i.e., an edge of the pack housing 110 parallel to the X-axis direction). The positive terminal PT and the negative terminal NT of the battery cell assembly 123 may be spaced apart from each other and overlap each other in the X-axis direction.

The positive terminal PT and the negative terminal NT of the battery cell assembly 124 may be spaced apart from each other in the X-axis direction and the Y-axis direction. The positive terminal PT of the battery cell assembly 124 may be closer to the central area of the pack housing 110 in the Y-axis direction than the negative terminal NT thereof. The positive electrode terminal PT and the negative electrode terminal NT of the battery cell assembly 124 may be arranged diagonally (i.e., obliquely with respect to each of the X-axis direction and the Y-axis direction).

An arrangement of the positive terminal PT and the negative terminal NT of the battery cell assembly 124 may be the same as an arrangement of the positive terminal PT and the negative terminal NT of the battery cell assembly 121. Accordingly, the battery cell assembly 121 may be the same as the battery cell assembly 124, when rotated (e.g., when rotated about a Z-axis).

The positive terminal PT and the negative terminal NT of the battery cell assembly 125 may be spaced apart from each other in the X-axis direction and the Y-axis direction. The positive terminal PT of the battery cell assembly 125 may be farther from the central area of the pack housing 110 in the Y-axis direction than the negative terminal NT thereof. The positive electrode terminal PT and the negative electrode terminal NT of the battery cell assembly 125 may be arranged diagonally (i.e., obliquely with respect to each of the X-axis direction and the Y-axis direction).

An arrangement of the positive terminal PT and the negative terminal NT of the battery cell assembly 125 may be the same as an arrangement of the positive terminal PT and the negative terminal NT of the battery cell assembly 122. Accordingly, the battery cell assembly 125 may be the same as the battery cell assembly 122, when rotated (e.g., when rotated about the Z-axis).

The positive terminal PT and the negative terminal NT of the battery cell assembly 126 may be arranged in the X-axis direction. The positive terminal PT and the negative terminal NT of the battery cell assembly 126 may be closer to the central area of the pack housing 110 in the Y-axis direction than to the edge of the pack housing 110 in the Y-axis direction (i.e., the edge of the pack housing 110 parallel to the X-axis direction). The positive terminal PT and the negative terminal NT of the battery cell assembly 126 may be spaced apart from each other and overlap each other in the X-axis direction.

An arrangement of the positive terminal PT and the negative terminal NT of the battery cell assembly 126 may be the same as an arrangement of the positive terminal PT and the negative terminal NT of the battery cell assembly 123. Accordingly, the battery cell assembly 126 may be the same as the battery cell assembly 123, when rotated (e.g., when rotated about the Z-axis).

The inter-bus bar 141 may extend in the X-axis direction. The negative terminal NT of the battery cell assembly 121 and the positive terminal PT of the battery cell assembly 122 may be connected by the inter-bus bar 141. The negative terminal NT of the battery cell assembly 121 and the positive terminal PT of the battery cell assembly 122 may be coupled to the inter-bus bar 141. The inter-bus bar 141 may be configured to be electrically connected to the battery cell assembly 121 and the battery cell assembly 122. The battery cell assembly 121 and the battery cell assembly 122 may be connected in series by the inter-bus bar 141.

The negative terminal NT of the battery cell assembly 122 and the positive terminal PT of the battery cell assembly 123 may be arranged in the X-axis direction. The negative terminal NT of the battery cell assembly 122 may be spaced apart from and overlap the positive terminal PT of the battery cell assembly 123 in the X-axis direction.

The inter-bus bar 142 may extend in the X-axis direction. The negative terminal NT of the battery cell assembly 122 and the positive terminal PT of the battery cell assembly 123 may be connected by the inter-bus bar 142. The negative terminal NT of the battery cell assembly 122 and the positive terminal PT of the battery cell assembly 123 may be coupled to the inter-bus bar 142. The inter-bus bar 142 may be configured to be electrically connected to the battery cell assembly 122 and the battery cell assembly 123. The battery cell assembly 122 and the battery cell assembly 123 may be connected in series by the inter-bus bar 142.

The negative terminal NT of the battery cell assembly 123 and the positive terminal PT of the battery cell assembly 124 may be arranged in the Y-axis direction. The negative terminal NT of the battery cell assembly 123 may be spaced apart from and overlap the positive terminal PT of the battery cell assembly 124 in the Y-axis direction.

The inter-bus bar 143 may extend in the Y-axis direction. The negative terminal NT of the battery cell assembly 123 and the positive terminal PT of the battery cell assembly 124 may be connected by the inter-bus bar 143. The negative terminal NT of the battery cell assembly 123 and the positive terminal PT of the battery cell assembly 124 may be coupled to the inter-bus bar 143. The inter-bus bar 143 may be configured to be electrically connected to the battery cell assembly 123 and the battery cell assembly 124. The battery cell assembly 123 and the battery cell assembly 124 may be connected in series by the inter-bus bar 143.

The negative terminal NT of the battery cell assembly 124 and the positive terminal PT of the battery cell assembly 125 may be arranged in the X-axis direction. The negative terminal NT of the battery cell assembly 124 may be spaced apart from and overlap the positive terminal PT of the battery cell assembly 125 in the X-axis direction.

The inter-bus bar 144 may extend in the X-axis direction. The negative terminal NT of the battery cell assembly 124 and the positive terminal PT of the battery cell assembly 125 may be connected by the inter-bus bar 144. The negative terminal NT of the battery cell assembly 124 and the positive terminal PT of the battery cell assembly 125 may be coupled to the inter-bus bar 144. The inter-bus bar 144 may be configured to be electrically connected to the battery cell assembly 124 and the battery cell assembly 125. The battery cell assembly 124 and the battery cell assembly 125 may be connected in series by the inter-bus bar 144.

The negative terminal NT of the battery cell assembly 125 and the positive terminal PT of the battery cell assembly 126 may be arranged in the X-axis direction. The negative terminal NT of the battery cell assembly 125 may be spaced apart from and overlap the positive terminal PT of the battery cell assembly 126 in the X-axis direction.

The inter-bus bar 145 may extend in the X-axis direction. The negative terminal NT of the battery cell assembly 125 and the positive terminal PT of the battery cell assembly 126 may be connected by the inter-bus bar 145. The negative terminal NT of the battery cell assembly 125 and the positive terminal PT of the battery cell assembly 126 may be coupled to the inter-bus bar 145. The inter-bus bar 145 may be configured to be electrically connected to the battery cell assembly 125 and the battery cell assembly 126. The battery cell assembly 125 and the battery cell assembly 126 may be connected in series by the inter-bus bar 145.

According to embodiments, a distance between the inter-bus bar 141 and the inter-bus bar 145 in the Y-axis direction may be substantially the same as a distance between the inter-bus bar 142 and the inter-bus bar 144 in the Y-axis direction. According to embodiments, a distance between the inter-bus bar 141 and the inter-bus bar 144 in the Y-axis direction may be different from a distance between the inter-bus bar 142 and the inter-bus bar 145 in the Y-axis direction. According to embodiments, the distance between the inter-bus bar 141 and the inter-bus bar 144 in the Y-axis direction may be greater than the distance between the inter-bus bar 142 and the inter-bus bar 145 in the Y-axis direction.

The exhaust devices 130 may be coupled to one of the side walls 110S. The side wall 110S coupled to the exhaust devices 130 may include an exhaust path connected to the exhaust devices 130. The exhaust devices 130 may be configured to delay thermal propagation by discharging a high-temperature gas from the inside of the battery pack 100 to the outside when at least one of the plurality of battery cell assemblies 121, 122, 123, 124, 125, and 126 is in a thermal runaway state.

Here, the thermal runaway state of each of the plurality of battery cell assemblies 121, 122, 123, 124, 125 and 126 is a state in which a temperature change of each of the plurality of battery cell assemblies 121, 122, 123, 124, 125 and 126 accelerates the temperature change, and is an uncontrollable positive feedback. The temperature of the plurality of battery cell assemblies 121, 122, 123, 124, 125 and 126 that are in the thermal runaway state sharply increases, and a large amount of a high-pressure gas and combustion debris are discharged.

According to embodiments, the inter-bus bars 141, 142, 143, 144 and 145 and the positive terminals PT and the negative terminals NT of the plurality of battery cell assemblies 121, 122, 123, 124, 125 and 126 may be dispersed. Accordingly, when a thermal runaway event occurs in the battery pack 100, an internal short circuit of the plurality of battery cell assemblies 121, 122, 123, 124, 125, and 126 due to the thermal runaway event may be mitigated or prevented, and the safety of the battery pack 100 may be improved.

The center beam 151 and the cross-beams 153 and 154 may be formed by the extrusion process. The center beam 151 and the cross-beams 153 and 154 may include cavities that are spaces between ribs, and thus, a housing of the battery pack 100 may have decreased weight. The center beam 151 may extend in the X-axis direction. The cross-beams 153 and 154 may extend in the Y-axis direction.

The center beam 151 and the cross-beams 153 and 154 may separate the plurality of battery cell assemblies 121, 122, 123, 124, 125 and 126. The cross-beam 153 may be interposed between the battery cell assemblies 121 and 122, the cross-beam 154 may be interposed between the battery cell assemblies 122 and 123, the cross-beam 154 may be interposed between the battery cell assemblies 124 and 125, and the cross-beam 153 may be interposed between the battery cell assemblies 125 and 126. The center beam 151 may be interposed between the battery cell assemblies 121, 122 and 123 and the battery cell assemblies 124, 125 and 126.

The center beam 151 may include a groove GRV through which the inter-bus bar 143 passes. The cross-beam 153 between the battery cell assemblies 121 and 122 may include a groove GRV through which the inter-bus bar 141 passes. The cross-beam 154 between the battery cell assemblies 122 and 123 may include a groove GRV through which the inter-bus bar 142 passes. The cross-beam 154 between the battery cell assemblies 124 and 125 may include a groove GRV through which the inter-bus bar 144 passes. The cross-beam 153 between the battery cell assemblies 125 and 126 may include a groove GRV through which the inter-bus bar 145 passes.

The groove GRV of each of the cross-beams 153 may be closer to the edge of the pack housing 110 in the Y-axis direction (i.e., the edge of the pack housing 110 parallel to the X-axis direction) than to the central area of the pack housing 110 in the Y-axis direction. The groove GRV of each of the cross-beams 154 may be closer to the central area of the pack housing 110 in the Y-axis direction than to the edge of the pack housing 110 in the Y-axis direction (i.e., the edge of the pack housing 110 parallel to the X-axis direction).

The battery pack 100 may further include electronic components. The electronic components may be provided in the pack housing 110. The electronic components may be provided between one of the side walls 110S on which the exhaust devices 130 are installed and the battery cell assemblies 121, 122, 123, 124, 125, and 126.

The electrical components may include, for example, a BMS. The BMS may be configured to monitor, balance, and control the battery pack 100. The monitoring of the battery pack 100 may include measuring voltages and currents of certain nodes inside the plurality of battery cell assemblies 121, 122, 123, 124, 125 and 126 and measuring temperatures at set positions inside the battery pack 100. The battery pack 100 may include measuring devices for measuring a voltage, a current, and temperature as described above.

The balancing of the battery pack 100 is an operation of reducing a deviation between the plurality of battery cell assemblies 121, 122, 123, 124, 125 and 126. The controlling of the battery pack 100 includes preventing overcharging, over-discharging, and overcurrent. Through monitoring, balancing, and controlling, the battery pack 100 may be operated under optimal conditions to prevent a decrease in the lifespan of each of the plurality of battery cell assemblies 121, 122, 123, 124, 125 and 126.

The electronic components may further include a cooling device, a power relay assembly (PRA), a safety plug, etc. The cooling device may include a cooling fan. The cooling fan may circulate air in the battery pack 100 to prevent overheating of each of the plurality of battery assemblies 121, 122, 123, 124, 125 and 126. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 121, 122, 123, 124, 125 and 126 and the external load, when an abnormal voltage such as a voltage surge occurs.

The battery pack 100 may further include a lead plate coupled to the side walls 110S. The lead plate may cover components, e.g., the battery cell assemblies 121, 122, 123, 124, 125 and 126 and the electronic components, inside the battery pack 100. The lead plate may be fixed to the battery pack 100 by a mechanical coupling means, e.g., a bolt.

### (Second Embodiment)

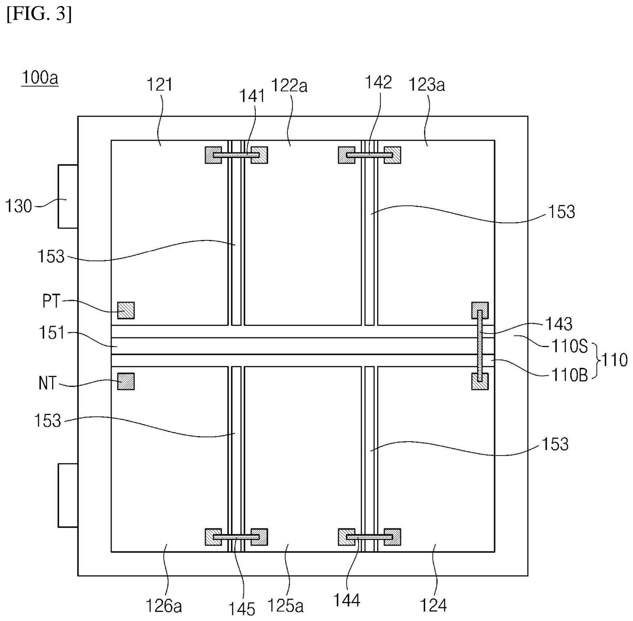

FIG. 3 illustrates a battery pack 100a according to other embodiments.

Referring to FIG. 3, the battery pack 100a may include a pack housing 110, a plurality of battery cell assemblies 121, 122a, 123a, 124, 125a and 126a, exhaust devices 130, and inter-bus bars 141, 142, 143, 144 and 145, a center beam 151, and cross-beams 153.

The pack housing 110, the battery cell assemblies 121 and 124, the exhaust devices 130, and the inter-bus bars 141, 142, 143, 144 and 145 are substantially the same as those described above with reference to FIG. 1, and thus, redundant description thereof is omitted here.

A positive terminal PT and a negative terminal NT of the battery cell assembly 122a may be arranged in the X-axis direction. The positive terminal PT and the negative terminal NT of the battery cell assembly 122a may be closer to an edge of the pack housing 110 in the Y-axis direction (i.e., an edge of the pack housing 110 parallel to the X-axis direction) than to a central area of the pack housing 110 in the Y-axis direction. The positive terminal PT and the negative terminal NT of the battery cell assembly 122a may be spaced apart from and overlap each other in the X-axis direction.

A positive terminal PT and a negative terminal NT of the battery cell assembly 123a may be spaced apart from each other in the X-axis direction and the Y-axis direction. The positive terminal PT of the battery cell assembly 123a may be farther from the central area of the pack housing 110 in the Y-axis direction than the negative terminal NT thereof. The positive electrode terminal PT and the negative electrode terminal NT of the battery cell assembly 123a may be arranged diagonally (i.e., obliquely with respect to each of the X-axis direction and the Y-axis direction).

A positive terminal PT and a negative terminal NT of the battery cell assembly 125a may be arranged in the X-axis direction. The positive terminal PT and the negative terminal NT of the battery cell assembly 125a may be closer to the edge of the pack housing 110 in the Y-axis direction (i.e., the edge of the pack housing 110 parallel to the X-axis direction) than to the central area of the pack housing 110 in the Y-axis direction. The positive terminal PT and the negative terminal NT of the battery cell assembly 125a may be spaced apart from and overlap each other in the X-axis direction.

A positive terminal PT and a negative terminal NT of the battery cell assembly 126a may be spaced apart from each other in the X-axis direction and the Y-axis direction. The positive terminal PT of the battery cell assembly 126a may be farther from the central area of the pack housing 110 in the Y-axis direction than the negative terminal NT thereof. The positive electrode terminal PT and the negative electrode terminal NT of the battery cell assembly 126a may be arranged diagonally (i.e., obliquely with respect to each of the X-axis direction and the Y-axis direction).

A negative terminal NT of the battery cell assembly 121 and the positive terminal PT of the battery cell assembly 122a may be arranged in the X-axis direction. The negative terminal NT of the battery cell assembly 121 may be spaced apart from and overlap the positive terminal PT of the battery cell assembly 122a in the X-axis direction.

The negative terminal NT of the battery cell assembly 122a and the positive terminal PT of the battery cell assembly 123a may be arranged in the X-axis direction. The negative terminal NT of the battery cell assembly 122a may be spaced apart from and overlap the positive terminal PT of the battery cell assembly 123a in the X-axis direction.

The negative terminal NT of the battery cell assembly 123a and the positive terminal PT of the battery cell assembly 124 may be arranged in the Y-axis direction. The negative terminal NT of the battery cell assembly 123a may be spaced apart from and overlap the positive terminal PT of the battery cell assembly 124 in the Y-axis direction.

The negative terminal NT of the battery cell assembly 124 and the positive terminal PT of the battery cell assembly 125a may be arranged in the X-axis direction. The negative terminal NT of the battery cell assembly 124 may be spaced apart from and overlap the positive terminal PT of the battery cell assembly 125a in the X-axis direction.

The negative terminal NT of the battery cell assembly 125a and the positive terminal PT of the battery cell assembly 126a may be arranged in the X-axis direction. The negative terminal NT of the battery cell assembly 125a may be spaced apart from and overlap the positive terminal PT of the battery cell assembly 126a in the X-axis direction.

According to embodiments, a distance between the inter-bus bar 141 and the inter-bus bar 145 in the Y-axis direction may be substantially the same as a distance between the inter-bus bar 142 and the inter-bus bar 144 in the Y-axis direction. According to embodiments, a distance between the inter-bus bar 141 and the inter-bus bar 144 in the Y-axis direction may be substantially the same as a distance between the inter-bus bar 142 and the inter-bus bar 145 in the Y-axis direction.

The cross-beam 153 may be interposed between the battery cell assemblies 121 and 122, the cross-beam 153 may be interposed between the battery cell assemblies 122 and 123, the cross-beam 153 may be interposed between the battery cell assemblies 124 and 125, and the cross-beam 153 may be interposed between the battery cell assemblies 125 and 126.

### (Third Embodiment)

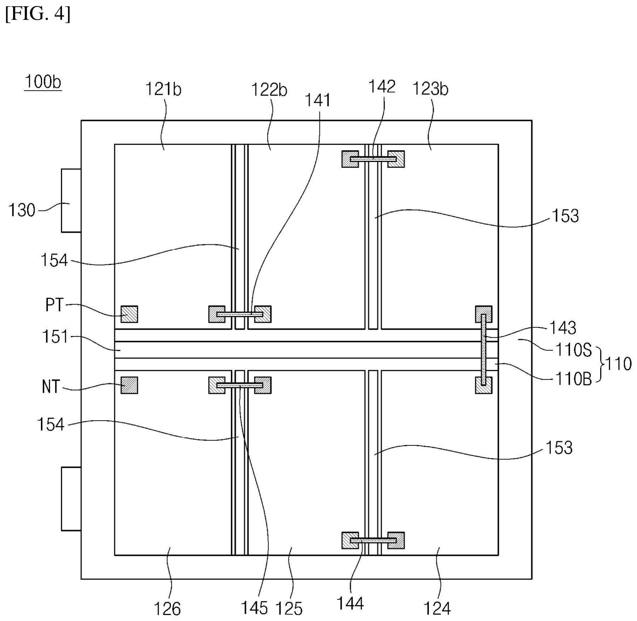

FIG. 4 illustrates a battery pack 100b according to other embodiments.

Referring to FIG. 4, the battery pack 100b may include a pack housing 110, a plurality of battery cell assemblies 121b, 122b, 123b, 124, 125 and 126, exhaust devices 130, inter-bus bars 141, 142, 143, 144 and 145, a center beam 151, and cross-beams 153 and 154.

The pack housing 110, the battery cell assemblies 124, 125 and 126, the exhaust devices 130, and the inter-bus bars 141, 142, 143, 144 and 145 are substantially the same as those described above with reference to FIG. 1, and thus, redundant description thereof is omitted here.

A positive terminal PT and a negative terminal NT of the battery cell assembly 121b may be arranged in the X-axis direction. The positive terminal PT and the negative terminal NT of the battery cell assembly 121b may be closer to a central area of the pack housing 110 in the Y-axis direction than to an edge of the pack housing 110 in the Y-axis direction (i.e., an edge of the pack housing 110 parallel to the X-axis direction). The positive terminal PT and the negative terminal NT of the battery cell assembly 121b may be spaced apart from each other and overlap each other in the X-axis direction.

A positive terminal PT and a negative terminal NT of the battery cell assembly 122b may be spaced apart from each other in the X-axis direction and the Y-axis direction. The positive terminal PT of the battery cell assembly 122b may be closer to the central area of the pack housing 110 in the Y-axis direction than the negative terminal NT thereof. The positive electrode terminal PT and the negative electrode terminal NT of the battery cell assembly 122b may be arranged diagonally (i.e., obliquely with respect to each of the X-axis direction and the Y-axis direction).

A positive terminal PT and a negative terminal NT of the battery cell assembly 123b may be spaced apart from each other in the X-axis direction and the Y-axis direction. The positive terminal PT of the battery cell assembly 123b may be farther from the central area of the pack housing 110 in the Y-axis direction than the negative terminal NT thereof. The positive electrode terminal PT and the negative electrode terminal NT of the battery cell assembly 123b may be arranged diagonally (i.e., obliquely with respect to each of the X-axis direction and the Y-axis direction).

The negative terminal NT of the battery cell assembly 121b and the positive terminal PT of the battery cell assembly 122b may be arranged in the X-axis direction. The negative terminal NT of the battery cell assembly 121b may be spaced apart from and overlap the positive terminal PT of the battery cell assembly 122b in the X-axis direction.

The negative terminal NT of the battery cell assembly 122b and the positive terminal PT of the battery cell assembly 123b may be arranged in the X-axis direction. The negative terminal NT of the battery cell assembly 122b may be spaced apart from and overlap the positive terminal PT of the battery cell assembly 123b in the X-axis direction.

The negative terminal NT of the battery cell assembly 123b and the positive terminal PT of the battery cell assembly 124 may be arranged in the Y-axis direction. The negative terminal NT of the battery cell assembly 123b may be spaced apart from and overlap the positive terminal PT of the battery cell assembly 124 in the Y-axis direction.

According to embodiments, a distance between the inter-bus bar 141 and the inter-bus bar 145 in the Y-axis direction may be different from a distance between the inter-bus bar 142 and the inter-bus bar 144 in the Y-axis direction. According to embodiments, the distance between the inter-bus bar 141 and the inter-bus bar 145 in the Y-axis direction may less than the distance between the inter-bus bar 142 and the inter-bus bar 144 in the Y-axis direction. According to embodiments, a distance between the inter-bus bar 141 and the inter-bus bar 144 in the Y-axis direction may be substantially the same as a distance between the inter-bus bar 142 and the inter-bus bar 145 in the Y-axis direction.

The cross-beam 154 may be interposed between the battery cell assemblies 121 and 122, the cross-beam 153 may be interposed between the battery cell assemblies 122 and 123, the cross-beam 153 may be interposed between the battery cell assemblies 124 and 125, and the cross-beam 154 may be interposed between the battery cell assemblies 125 and 126.

### (Fourth Embodiment)

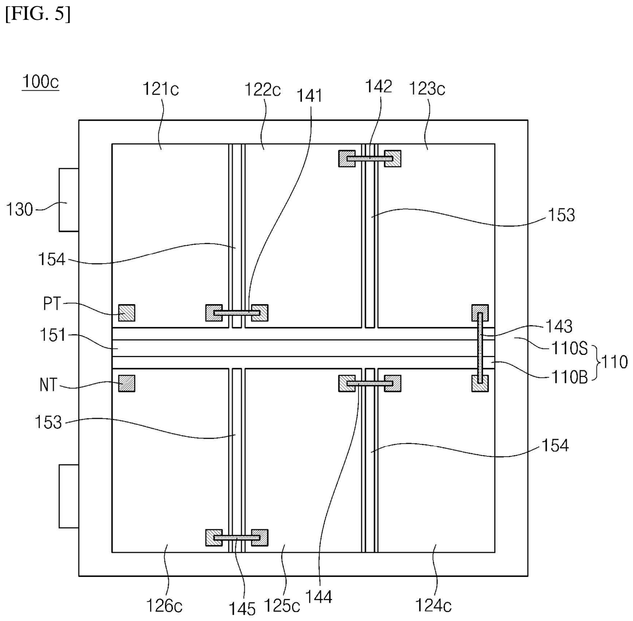

FIG. 5 illustrates a battery pack 100c according to other embodiments.

Referring to FIG. 4, the battery pack 100c may include a pack housing 110, a plurality of battery cell assemblies 121c, 122c, 123c, 124c, 125c and 126c, exhaust devices 130, inter-bus bars 141, 142, 143, 144 and 145, a center beam 151, and cross-beams 153 and 154.

The pack housing 110, the exhaust devices 130, and the inter-bus bars 141, 142, 143, 144, and 145 are substantially the same as those described above with reference to FIG. 1 and thus redundant description thereof is omitted here.

A positive terminal PT and a negative terminal NT of the battery cell assembly 121c may be arranged in the X-axis direction. The positive terminal PT and the negative terminal NT of the battery cell assembly 121c may be closer to a central area of the pack housing 110 in the Y-axis direction than to an edge of the pack housing 110 in the Y-axis direction (i.e., an edge of the pack housing 110 parallel to the X-axis direction). The positive terminal PT and the negative terminal NT of the battery cell assembly 121c may be spaced apart from each other and overlap each other in the X-axis direction.

A positive terminal PT and a negative terminal NT of the battery cell assembly 122c may be spaced apart from each other in the X-axis direction and the Y-axis direction. The positive terminal PT of the battery cell assembly 122c may be closer to the central area of the pack housing 110 in the Y-axis direction than the negative terminal NT thereof. The positive electrode terminal PT and the negative electrode terminal NT of the battery cell assembly 122c may be arranged diagonally (i.e., obliquely with respect to each of the X-axis direction and the Y-axis direction).

A positive terminal PT and a negative terminal NT of the battery cell assembly 123c may be spaced apart from each other in the X-axis direction and the Y-axis direction. The positive terminal PT of the battery cell assembly 123c may be farther from the central area of the pack housing 110 in the Y-axis direction than the negative terminal NT thereof. The positive electrode terminal PT and the negative electrode terminal NT of the battery cell assembly 122c may be arranged diagonally (i.e., obliquely with respect to each of the X-axis direction and the Y-axis direction).

A positive terminal PT and a negative terminal NT of the battery cell assembly 124c may be arranged in the X-axis direction. The positive terminal PT and the negative terminal NT of the battery cell assembly 124c may be closer to the central area of the pack housing 110 in the Y-axis direction than to the edge of the pack housing 110 in the Y-axis direction (i.e., the edge of the pack housing 110 parallel to the X-axis direction). The positive terminal PT and the negative terminal NT of the battery cell assembly 124c may be spaced apart from each other and overlap each other in the X-axis direction.

A positive terminal PT and a negative terminal NT of the battery cell assembly 125c may be spaced apart from each other in the X-axis direction and the Y-axis direction. The positive terminal PT of the battery cell assembly 125c may be closer to the central area of the pack housing 110 in the Y-axis direction than the negative terminal NT thereof. The positive electrode terminal PT and the negative electrode terminal NT of the battery cell assembly 125c may be arranged diagonally (i.e., obliquely with respect to each of the X-axis direction and the Y-axis direction).

A positive terminal PT and a negative terminal NT of the battery cell assembly 126c may be spaced apart from each other in the X-axis direction and the Y-axis direction. The positive terminal PT of the battery cell assembly 126c may be farther from the central area of the pack housing 110 in the Y-axis direction than the negative terminal NT thereof. The positive electrode terminal PT and the negative electrode terminal NT of the battery cell assembly 126c may be arranged diagonally (i.e., obliquely with respect to each of the X-axis direction and the Y-axis direction).

The negative terminal NT of the battery cell assembly 121c and the positive terminal PT of the battery cell assembly 122c may be arranged in the X-axis direction. The negative terminal NT of the battery cell assembly 121c may be spaced apart from and overlap the positive terminal PT of the battery cell assembly 122c in the X-axis direction.

The negative terminal NT of the battery cell assembly 122c and the positive terminal PT of the battery cell assembly 123c may be arranged in the X-axis direction. The negative terminal NT of the battery cell assembly 122c may be spaced apart from and overlap the positive terminal PT of the battery cell assembly 123c in the X-axis direction.

The negative terminal NT of the battery cell assembly 123c and the positive terminal PT of the battery cell assembly 124c may be arranged in the Y-axis direction. The negative terminal NT of the battery cell assembly 123c may be spaced apart from and overlap the positive terminal PT of the battery cell assembly 124c in the Y-axis direction.

The negative terminal NT of the battery cell assembly 124c and the positive terminal PT of the battery cell assembly 125c may be arranged in the X-axis direction. The negative terminal NT of the battery cell assembly 124c may be spaced apart from and overlap the positive terminal PT of the battery cell assembly 125c in the X-axis direction.

The negative terminal NT of the battery cell assembly 125c and the positive terminal PT of the battery cell assembly 126c may be arranged in the X-axis direction. The negative terminal NT of the battery cell assembly 125c may be spaced apart from and overlap the positive terminal PT of the battery cell assembly 126c in the X-axis direction.

According to embodiments, a distance between the inter-bus bar 141 and the inter-bus bar 145 in the Y-axis direction may be substantially the same as a distance between the inter-bus bar 142 and the inter-bus bar 144 in the Y-axis direction. According to embodiments, a distance between the inter-bus bar 141 and the inter-bus bar 144 in the Y-axis direction may be different from a distance between the inter-bus bar 142 and the inter-bus bar 145 in the Y-axis direction. According to embodiments, the distance between the inter-bus bar 141 and the inter-bus bar 144 in the Y-axis direction may less than the distance between the inter-bus bar 142 and the inter-bus bar 145 in the Y-axis direction.

The cross-beam 154 may be interposed between the battery cell assemblies 121 and 122, the cross-beam 153 may be interposed between the battery cell assemblies 122 and 123, the cross-beam 154 may be interposed between the battery cell assemblies 124 and 125, and the cross-beam 153 may be interposed between the battery cell assemblies 125 and 126.

### (Fifth Embodiment)

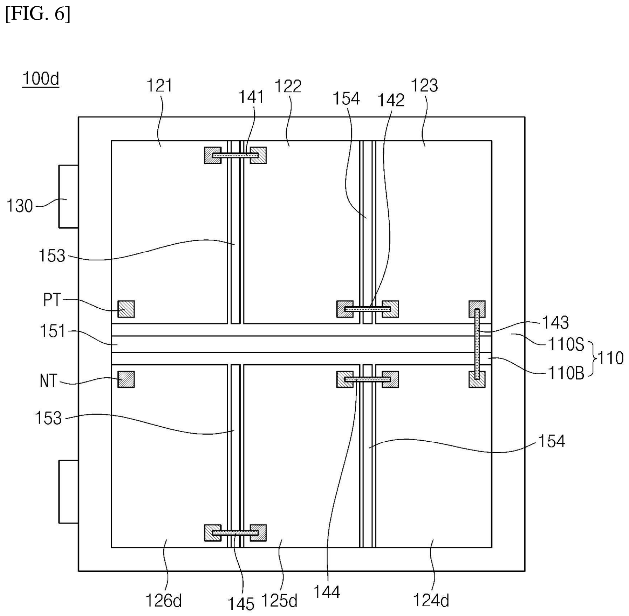

FIG. 6 illustrates a battery pack 100d according to other example embodiments.

Referring to FIG. 6, the battery pack 100d includes a pack housing 110, a plurality of battery cell assemblies 121, 122, 123, 124d, 125d and 126d, exhaust devices 130, inter-bus bars 141, 142, 143, 144 and 145, a center beam 151, and cross-beams 153 and 154.

The pack housing 110, the battery cell assemblies 121, 122 and 123, the exhaust devices 130, and the inter-bus bars 141, 142, 143, 144 and 145 are substantially the same as those described above with reference to FIG. 1, and thus, redundant description thereof is omitted here.

A positive terminal PT and a negative terminal NT of the battery cell assembly 124d may be arranged in the X-axis direction. The positive terminal PT and the negative terminal NT of the battery cell assembly 124d may be closer to a central area of the pack housing 110 in the Y-axis direction than to an edge of the pack housing 110 in the Y-axis direction (i.e., an edge of the pack housing 110 parallel to the X-axis direction). The positive terminal PT and the negative terminal NT of the battery cell assembly 124d may be spaced apart from each other and overlap each other in the X-axis direction.

A positive terminal PT and a negative terminal NT of the battery cell assembly 125d may be spaced apart from each other in the X-axis direction and the Y-axis direction. The positive terminal PT of the battery cell assembly 125d may be closer to the central area of the pack housing 110 in the Y-axis direction than the negative terminal NT thereof. The positive electrode terminal PT and the negative electrode terminal NT of the battery cell assembly 125d may be arranged diagonally (i.e., obliquely with respect to each of the X-axis direction and the Y-axis direction).

A positive terminal PT and a negative terminal NT of the battery cell assembly 126d may be spaced apart from each other in the X-axis direction and the Y-axis direction. The positive terminal PT of the battery cell assembly 126d may be farther from the central area of the pack housing 110 in the Y-axis direction than the negative terminal NT thereof. The positive electrode terminal PT and the negative electrode terminal NT of the battery cell assembly 126d may be arranged diagonally (i.e., obliquely with respect to each of the X-axis direction and the Y-axis direction).

A negative terminal NT of the battery cell assembly 123 and the positive terminal PT of the battery cell assembly 124d may be arranged in the Y-axis direction. The negative terminal NT of the battery cell assembly 123 may be spaced apart from and overlap the positive terminal PT of the battery cell assembly 124d in the Y-axis direction.

The negative terminal NT of the battery cell assembly 124d and the positive terminal PT of the battery cell assembly 125d may be arranged in the X-axis direction. The negative terminal NT of the battery cell assembly 124d may be spaced apart from and overlap the positive terminal PT of the battery cell assembly 125d in the X-axis direction.

The negative terminal NT of the battery cell assembly 125d and the positive terminal PT of the battery cell assembly 126d may be arranged in the X-axis direction. The negative terminal NT of the battery cell assembly 125d may be spaced apart from and overlap the positive terminal PT of the battery cell assembly 126d in the X-axis direction.

According to embodiments, a distance between the inter-bus bar 141 and the inter-bus bar 145 in the Y-axis direction may be different from a distance between the inter-bus bar 142 and the inter-bus bar 144 in the Y-axis direction. According to embodiments, the distance between the inter-bus bar 141 and the inter-bus bar 145 in the Y-axis direction may greater than the distance between the inter-bus bar 142 and the inter-bus bar 144 in the Y-axis direction. According to embodiments, a distance between the inter-bus bar 141 and the inter-bus bar 144 in the Y-axis direction may be substantially the same as a distance between the inter-bus bar 142 and the inter-bus bar 145 in the Y-axis direction.

The cross-beam 153 may be interposed between the battery cell assemblies 121 and 122, the cross-beam 154 may be interposed between the battery cell assemblies 122 and 123, the cross-beam 153 may be interposed between the battery cell assemblies 124 and 125, and the cross-beam 154 may be interposed between the battery cell assemblies 125 and 126.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack, comprising:
first to third battery cell assemblies arranged in a first direction;
fourth to sixth battery cell assemblies arranged in the first direction, and spaced apart from the first to third battery cell assemblies in a second direction perpendicular to the first direction;
a first inter-bus bar electrically connected to each of the first and second battery cell assemblies;
a second inter-bus bar electrically connected to each of the second and third battery cell assemblies;
a third inter-bus bar electrically connected to each of the third and fourth battery cell assemblies;
a fourth inter-bus bar electrically connected to each of the fourth and fifth battery cell assemblies; and
a fifth inter-bus bar electrically connected to each of the fifth and sixth battery cell assemblies,
wherein the first inter-bus bar and the second inter-bus bar are spaced apart from each other in the second direction.

2. The battery pack of claim 1, wherein the second battery cell assembly comprises a second positive terminal connected to the first inter-bus bar, and a second negative terminal connected to the second inter-bus bar, and
the second positive terminal and the second negative terminal are spaced apart from each other in a third direction oblique to each of the first and second directions.

3. The battery pack of claim 1, wherein the fourth inter-bus bar and the fifth inter-bus bar are spaced apart from each other in the second direction.

4. The battery pack of claim 1, wherein a distance between the first inter-bus bar and the fifth inter-bus bar in the second direction is the same as a distance between the second inter-bus bar and the fourth inter-bus bar in the second direction.

5. The battery pack of claim 4, wherein a distance between the first inter-bus bar and the fourth inter-bus bar in the second direction is the same as a distance between the second inter-bus bar and the fifth inter-bus bar in the second direction.

6. The battery pack of claim 4, wherein a distance between the first inter-bus bar and the fourth inter-bus bar in the second direction is different from a distance between the second inter-bus bar and the fifth inter-bus bar in the second direction.

7. The battery pack of claim 6, wherein the distance between the first inter-bus bar and the fourth inter-bus bar in the second direction is greater than the distance between the second inter-bus bar and the fifth inter-bus bar in the second direction.

8. The battery pack of claim 6, wherein the distance between the first inter-bus bar and the fourth inter-bus bar in the second direction is less than the distance between the second inter-bus bar and the fifth inter-bus bar in the second direction.

9. The battery pack of claim 1, wherein a distance between the first inter-bus bar and the fifth inter-bus bar in the second direction is different from a distance between the second inter-bus bar and the fourth inter-bus bar in the second direction.

10. The battery pack of claim 1, wherein a distance between the first inter-bus bar and the fifth inter-bus bar in the second direction is greater than the distance between the second inter-bus bar and the fourth inter-bus bar in the second direction.

11. The battery pack of claim 10, wherein a distance between the first inter-bus bar and the fourth inter-bus bar in the second direction is the same as a distance between the second inter-bus bar and the fifth inter-bus bar in the second direction.

12. The battery pack of claim 1, wherein a distance between the first inter-bus bar and the fifth inter-bus bar in the second direction is less than a distance between the second inter-bus bar and the fourth inter-bus bar in the second direction.

13. The battery pack of claim 12, wherein a distance between the first inter-bus bar and the fourth inter-bus bar in the second direction is the same as a distance between the second inter-bus bar and the fifth inter-bus bar in the second direction.
